# EUROPEAN PATENT SPECIFICATION

(11) **EP 2 884 617 B1**
(45) Date of publication and mention of the grant of the patent: **03.01.2018**
(21) Application number: 13828747.9
(22) Date of filing: 06.08.2013
(51) Int. Cl.: H02J 7/00, H01M 10/44, B60L 11/18, H01M 10/46, B60L 1/00, H02J 5/00, H02J 7/02

(54) **WIRELESS CHARGING DEVICE, PROGRAM THEREFOR AND AUTOMOBILE UTILIZING IT**
DRAHTLOSE LADEVORRICHTUNG, PROGRAMM DAFÜR UND KRAFTFAHRZEUG DAMIT
DISPOSITIF DE CHARGE SANS FIL, SON PROGRAMME ET VÉHICULE AUTOMOBILE LE METTANT EN OEUVRE.

(30) Priority: 08.08.2012 JP 2012175717; 08.08.2012 JP 2012175718
(43) Date of publication of application: 17.06.2015
(73) Proprietor: Panasonic Intellectual Property Management Co., Ltd., Osaka-shi, Osaka 540-6207 (JP)
(72) Inventor: IWABUCHI, Osamu, Kadoma-shi, Osaka 571-8501 (JP); KOIKE, Takahiro, Kadoma-shi, Osaka 571-8501 (JP)
(74) Representative: Vigand, Philippe
(86) International application number: PCT/JP2013/004755
(87) International publication number: WO 2014/024480

(56) References cited:
- EP-A2- 2 421 116
- WO-A1-2012/081519
- JP-A- 2011 244 624
- JP-A- 2012 110 135
- US-A- 5 850 135
- US-A1- 2011 109 264
- US-A1- 2012 119 708

## Description

### TECHNICAL FIELD

The present invention relates to a wireless charging device for charging a portable terminal such as a cellphone, a program therefor, and an automobile using it.

### BACKGROUND ART

With great advancements in functionality of portable terminals such as cellphones, their power consumptions have increased.

As a result, they are now required to be able to be charged at various places such as inside automobiles. Ones capable of what is called wireless charging which does not use a cable are attracting much attention as a recent trend.

A wireless charging device described below has been proposed which satisfies the above requirement is one.

The wireless charging device is equipped with a body case whose top surface is provided with a placement plate, a charging coil which is disposed movably in the body case so as to be opposed to the bottom surface of the placement plate, a driver for moving the charging coil in such a manner that it is kept opposed to the bottom surface of the placement plate, and a controller which is connected to the driver and the charging coil.

The charging coil is provided with plural position detection coils for detecting a position of a portable terminal that is put on the top surface of the placement plate (refer to Patent document 1, for example).

### Prior Art Documents

### Patent Documents

Patent document 1: JP-A-2009-247194 US2012/0119708A1 discloses a wireless charging apparatus with a movable primary coil.

### SUMMARY OF THE INVENTION

### Problems to Be Solved by the Invention

In the above conventional example, when a portable terminal is put on the top surface of the placement plate, a position of the portable terminal is detected by the position detection coils and the charging coil is moved to the detected position. Charging can be performed efficiently because it is performed in this state.

More specifically, pulse signals are sent from the position detection coils. Whether or not and at what position a portable terminal has been put on the placement plate are detected on the basis of whether or not echo signals return immediately thereafter from a charging coil incorporated in the portable terminal (in the following description, a charging coil incorporated in a portable terminal will be referred to as a "terminal charging coil").

However, depending on the position of the charging coil (incorporated in the body case of the wireless charging device) that completed charging, placement of a portable terminal on the top surface of the placement plate may be detected erroneously though no portable terminal has been put on it, causing an erroneous operation to follow.

This phenomenon occurs in the following manner. To detect whether or not and at what position it has been put a portable terminal has been put on the placement plate, as described above the position detection coils send pulse signals. Echo signals also return from the charging coil and are detected erroneously as ones from the terminal charging coil, causing an erroneous operation to follow.

An object of the present invention is to prevent such an erroneous operation.

### Means for Solving the Problems

To attain the above object, the invention provides a wireless charging device according to claim 1 and a method for driving a wireless charging device according to claim 9.

### Advantages of the Invention

Providing the above-described configuration comprising a body case whose top surface is provided with a placement plate; plural position detection coils which are provided in the placement plate and detect a position of a portable terminal that is put on a top surface of the placement plate; a charging coil which is disposed movably in the body case so as to be opposed to a bottom surface of the placement plate; a driver which moves the charging coil in such a manner that it is kept opposed to the bottom surface of the placement plate; and a controller which is connected to the driver and the charging coil, wherein after completion of charging of the portable terminal by the charging coil, the controller moves, using the driver, the charging coil to a position where its center deviates from the center of any of the plural position detection coils, the invention makes it possible to prevent an erroneous operation.

That is, in the invention, since after completion of charging of a portable terminal by the charging coil, the controller moves, using the driver, the charging coil to a position where its center deviates from the center of any of the plural position detection coils, echo signals transmitted from the charging coil in response to pulse signals transmitted from the position detection coils become sufficiently smaller than the judgment level.

This prevents an event that whether or not a portable terminal has been put on the top surface of the placement plate or whether or not a portable terminal has been put on somewhere on the top surface of the placement plate is detected erroneously on the basis of echo signals transmitted from the charging coil, causing an erroneous operation to follow.

Furthermore, providing the comprising a body case whose top surface is provided with a placement plate; plural position detection coils which detect a position of a portable terminal that is put on a top surface of the placement plate; a charging coil which is disposed movably in the body case so as to be opposed to a bottom surface of the placement plate; a driver which moves the charging coil in such a manner that it is kept opposed to the bottom surface of the placement plate; and a controller which is connected to the driver and the charging coil, wherein the controller causes the plural position detection coils to send detection pulses, then varies a judgment level for judgment as to whether a portable terminal has been put on the top surface of the placement plate on the basis of echo signals detected by the position detection coils, and thereafter judges whether a portable terminal has been put on the top surface of the placement plate using the judgment level, the invention makes it possible to prevent an erroneous operation.

That is, in the invention, since the controller causes the plural position detection coils to send detection pulses, then varies a judgment level for judgment as to whether a portable terminal has been put on the top surface of the placement plate on the basis of echo signals detected by the position detection coils, and thereafter judges whether a portable terminal has been put on the top surface of the placement plate using the judgment level, whether or not a portable terminal has been put on the top surface of the placement plate can be judged without being disturbed by echo signals transmitted from the charging coil, as a result of which an erroneous operation can be prevented.

### BRIEF DESCRIPTION OF THE DRAWINGS

[Fig. 1] Fig. 1 is a perspective view showing a state that a wireless charging device according to a first embodiment of the present invention is installed in the vehicle compartment of an automobile.
[Fig. 2] Fig. 2 is a perspective of the wireless charging device.
[Fig. 3] Fig. 3 is another perspective of the wireless charging device.
[Fig. 4] Fig. 4 is a perspective of the wireless charging device (part of which is removed).
[Fig. 5] Fig. 5 is a plan view the wireless charging device (part of which is removed).
[Fig. 6] Fig. 6 is a partially cutaway perspective view of the wireless charging device.
[Fig. 7] Fig. 7 is another perspective of the wireless charging device (part of which is removed).
[Fig. 8] Fig. 8 is a plan perspective of the wireless charging device (part of which is removed).
[Fig. 9] Fig. 9 is a control block diagram of the wireless charging device.
[Fig. 10] Fig. 10 is an operation flowchart of the wireless charging device.
[Fig. 11] Fig. 11 shows position detection coils of the wireless charging device.
[Fig. 12] Fig. 12 shows position detection coils of the wireless charging device.
[Fig. 13] Fig. 13 shows position detection coils of the wireless charging device.
[Fig. 14] Fig. 14 shows relationships between the position detection coils and a charging coil.
[Fig. 15] Fig. 15 is another operation flowchart of the wireless charging device.
[Fig. 16] Fig. 16 shows relationships between the position detection coils and a charging coil.
[Fig. 17] Fig. 17 shows relationships of another kind between the position detection coils and the charging coil.
[Fig. 18] Fig. 18 shows relationships of another kind between the position detection coils and the charging coil.
[Fig. 19] Fig. 19 shows relationships between position detection coils and a charging coil in a wireless charging device according to a second embodiment of the invention.
[Fig. 20] Fig. 20 shows relationships between the position detection coils and a charging coil.
[Fig. 21] Fig. 21 shows relationships of another kind between the position detection coils and the charging coil.
[Fig. 22] Fig. 22 shows echo signals that are detected by the position detection coils of the wireless charging device.
[Fig. 23] Fig. 23 shows echo signals of another kind that are detected by the position detection coils of the wireless charging device.
[Fig. 24] Fig. 24 is an operation flowchart of the wireless charging device.

### MODES FOR CARRYING OUT THE INVENTION

A first embodiment of the present invention will be hereinafter described with reference to the accompanying drawings.

### (Embodiment 1)

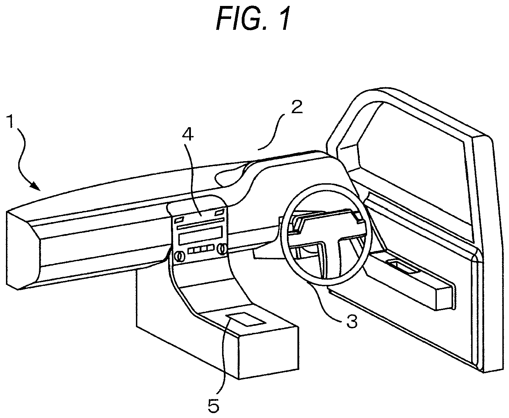

As shown in Fig. 1, a steering wheel 3 is disposed at a front position in a vehicle compartment 2 of an automobile 1.

An electronic apparatus 4 for reproducing music and video and displaying a car navigation picture is disposed beside the steering wheel 3.

Furthermore, a wireless charging device 5 is disposed in the rear of the electronic apparatus 4 in the vehicle compartment 2.

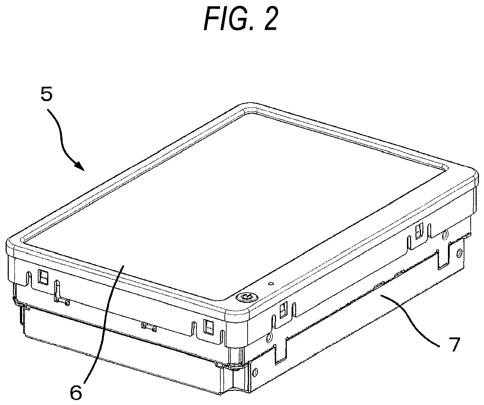

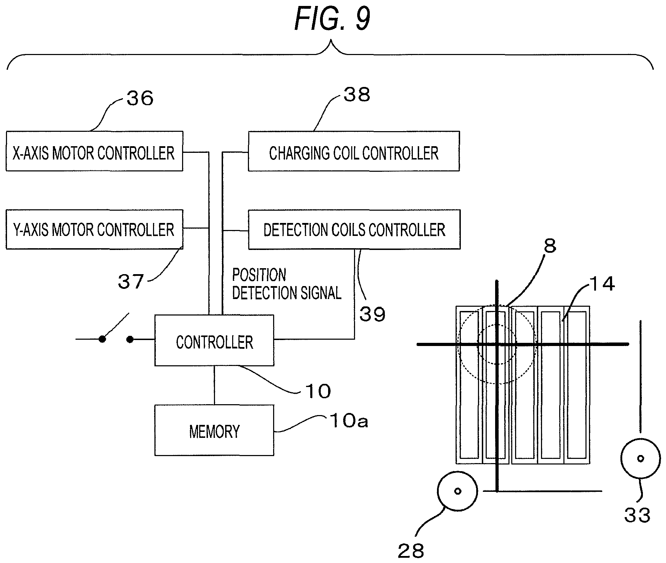

As shown in Figs. 2-6, the wireless charging device 5 is equipped with a box-shaped body case 7 whose top surface is provided with a placement plate 6, a charging coil 8 which is disposed movably in the body case 7 so as to be opposed to the bottom surface of the placement plate 6, a driver 9 for moving the charging coil 8 in a horizontal direction in such a manner that it is kept opposed to the bottom surface of the placement plate 6, and a controller (denoted by numeral 10 in Fig. 9) which is connected to the driver 9 and the charging coil 8.

The individual members and units will be described below in detail.

First, the placement plate 6 will be described.

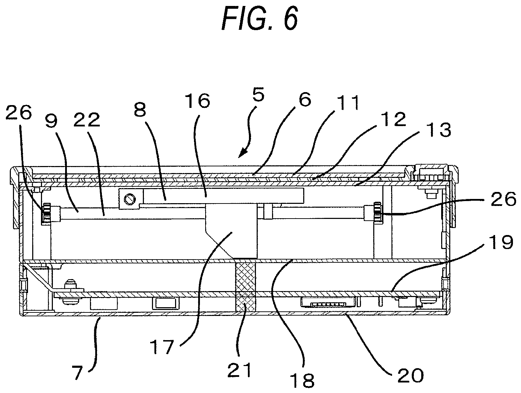

As shown in Fig. 6, the placement plate 6 is configured in such a manner that a back plate 13, an intermediate plate 12, and a surface plate 11 are laid one on another.

The surface plate 11 and the back plate 13 are made of a synthetic resin and the intermediate plate 12 is made of ceramic. That is, they are formed so as to allow a magnetic flux coming from the charging coil 8 to pass through themselves and go toward a portable terminal 15.

Position detection coils 14 (see Fig. 9) are disposed on the surfaces of the intermediate plate 12.

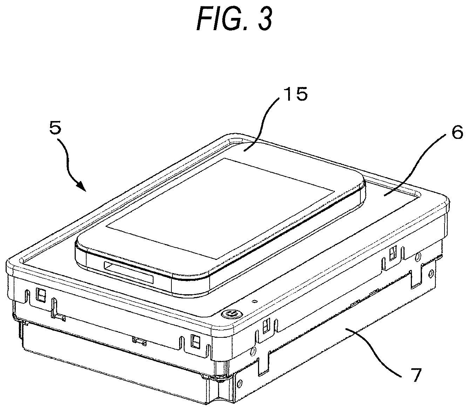

The position detection coils 14, which are the same as the ones used in the above-mentioned Patent document 1 (JP-A-2009-247194), serve to detect at what position on the top surface of the placement plate 6 a portable terminal 15 has been put in a manner shown in Fig. 3.

In the embodiment, at what position on the top surface of the placement plate 6 a portable terminal 15 has been put in the manner shown in Fig. 3 is detected using the position detection coils 14 and then the charging coil 8 is moved to the position of a charging coil (not shown) of the portable terminal 15 by the driver 9.

Next, the charging coil 8 and its neighborhood will be described.

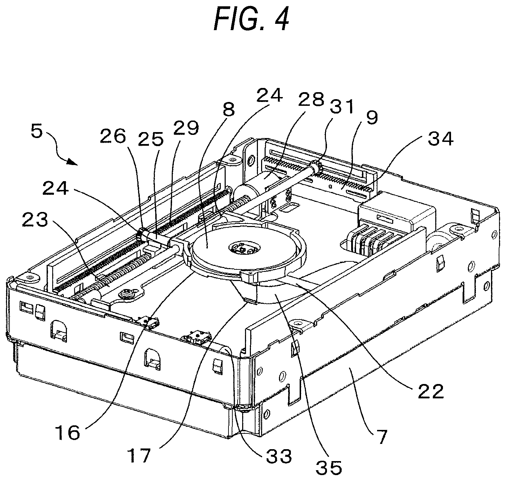

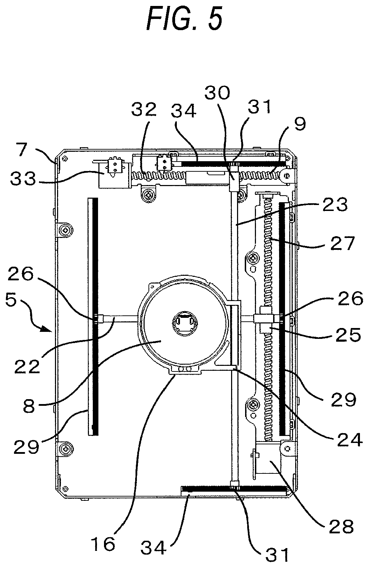

As seen from Figs. 4 and 5, the charging coil 8 is formed by winding a lead wire by plural turns into a circular ring shape and is held in a state that its outer circumference and bottom surface are covered with a holding body 16 which is made of a synthetic resin.

As shown in Fig. 6, a support leg 17 which is made of a synthetic resin and integral with the holding body 16 extends downward (i.e., away from the charging coil 8) from the bottom surface of the holding body 16.

A gap of 0.3 mm is formed between the bottom surface of the support leg 17 and the top surface of a metal support plate 18 which is disposed under the support leg 17. Therefore, in an ordinary state, the bottom surface of the support leg 17 does not come into contact with the top surface of the support plate 18 while the charging coil 8 is being moved.

In the embodiment, in the above-described configuration, the support leg 17 is disposed under the charging coil 8.

A control board 19 and a bottom plate 20 of the body case 7 are disposed under the support plate 18, and a support body 21 which penetrates through the control board 19 is disposed between the bottom surface of the support plate 18 and the top surface of the bottom plate 20.

Next, the driver 9 will be described.

As shown in Figs. 4 and 5, the driver 9 is equipped with an X-axis drive shaft 22 and a Y-axis drive shaft 23. A middle portion of each of the X-axis drive shaft 22 and the Y-axis drive shaft 23 is engaged with the holding body 16 outside its charging coil holding portion.

More specifically, a through-hole (not shown) through which the X-axis drive shaft 22 penetrates and a through-hole 24 through which the Y-axis drive shaft 23 penetrates are formed through the holding body 16 so as to be spaced from each other by a prescribed distance in the vertical direction and to cross each other. The X-axis drive shaft 22 and the Y-axis drive shaft 23 penetrate through those through-holes and are thereby engaged with the holding body 16.

The X-axis drive shaft 22 is provided with a worm wheel 25 at a position that is close to one end and gears 26 at the respective ends.

The worm wheel 25 is engaged with a worm 27 which is linked to a motor 28.

The gears 26 at the respective ends are engaged with respective gear plates 29.

Therefore, when the motor 28 is driven, the worm 27 is rotated, whereby the worm wheel 25 is moved in the X-axis direction together with the X-axis drive shaft 23. As a result, the charging coil 8 is moved in the X-axis direction.

The Y-axis drive shaft 23 is provided with a worm wheel 30 at a position that is close to one end and gears 31 at the respective ends.

The worm wheel 30 is engaged with a worm 32 which is linked to a motor 33.

The gears 31 at the respective ends are engaged with respective gear plates 34.

Therefore, when the motor 33 is driven, the worm 32 is rotated, whereby the worm wheel 30 is moved in the Y-axis direction together with the Y-axis drive shaft 23. As a result, the charging coil 8 is moved in the Y-axis direction.

In Fig. 4, numeral 35 denotes a flexible wiring board for energizing the charging coil 8. One end of the flexible wiring board 35 is fixed to a side surface of the above-mentioned support leg 17.

As shown in Fig. 9, the motors 28 and 33 are connected to the controller 10 via an X-axis motor controller 36 and a Y-axis motor controller 37, respectively.

The charging coil 8 is connected to the controller 10 via a charging coil controller 38, and the position detection coils 14 are connected to the controller 10 via a detection coils controller 39.

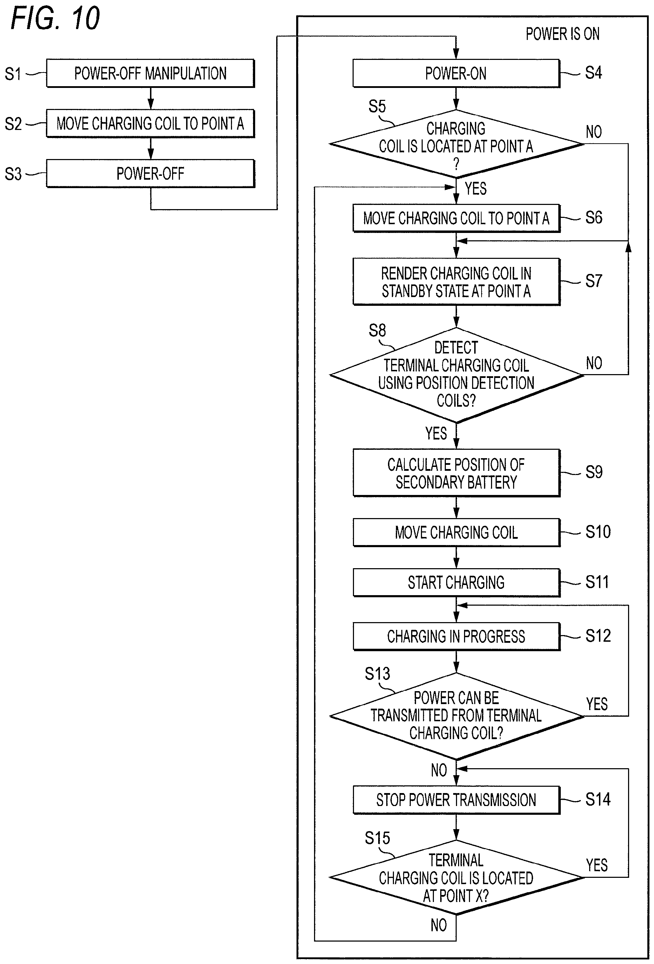

With the above-described configuration, in the embodiment, when a manipulation for turning off a power switch (not shown) is made (S1 in Fig. 10), the charging coil 8 is moved to the center (hereinafter referred to as point A) of the body case 7 (S2 in Fig. 10; see Figs. 4-6). Then the power is turned off (S3 in Fig. 10).

That is, in a state that no portable terminal 15 is put on the placement plate 6 of the body case 7 (see Fig. 2), as shown in Fig. 1 the placement plate 6 is exposed to the vehicle compartment 2.

Therefore, there may occur an event that a hand is put on the placement plate 6 inadvertently, in which case a load is imposed on the placement plate 6.

In view of the above, in the embodiment, since as shown in Figs. 4-6 the charging coil 8 is moved to the center of the body case 7, such a load is supported by the charging coil 8, the holding body 16, the support leg 17, and the support plate 18.

When such a load is imposed on the placement plate 6, the placement plate 6 is curved downward though slightly. In this state, the charging coil 8, the holding body 16, and the support leg 17 are moved downward, whereby the bottom surface of the support leg 17 comes into contact with the top surface of the support plate 18.

As a result, the load is supported by the support plate 18 via the placement plate 6, the charging coil 8, the holding body 16, and the support leg 17. Thus, damaging of the placement plate 6 or the charging coil 8 can be suppressed.

In the embodiment, to increase the strength against a load, the bottom surface of the support plate 18 is supported by the bottom plate 20 of the body case 7 via the support body 21.

Upon removal of such a load, the placement plate 6 returns upward elastically. And the charging coil 8 and the holding body 16 also return upward because of elastic recovery of the X-axis drive shaft 22 and the Y-axis drive shaft 23. Therefore, the bottom surface of the support leg 17 come to be located over the top surface of the support plate 18 with a gap formed between them.

Therefore, there is no obstruction to a later movement of the charging coil 8.

To charge a portable terminal 15, first, the power switch (not shown) is turned on (S4 in Fig. 10) and the portable terminal 15 is put on the top surface of the placement plate 6.

In the embodiment, even in this state, first, the controller 10 checks whether or not the charging coil 8 is located at point A (S5 in Fig. 10).

This check can be made on the basis of drive amounts of the motors 28 and 33 that are stored in the X-axis motor controller 36 and the Y-axis motor controller 37, respectively.

If judging that charging coil 8 is not located at point A, the controller 10 moves the charging coil 8 to point A (S6 in Fig. 10) and renders it in a charging standby state at point A (S7 in Fig. 10).

Then the controller 10 detects at what position on the top surface of the placement plate 6 the portable terminal 15 has been put in the manner shown in Fig. 3 using the position detection coils 14 (S8 and S9 in Fig. 10).

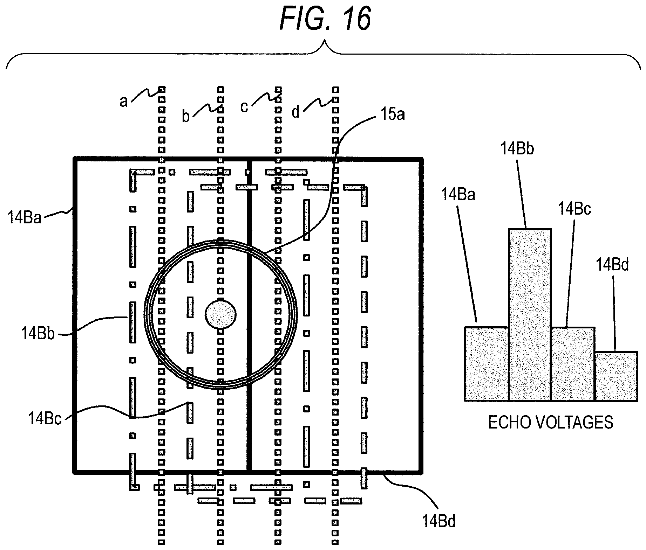

Actually, the position where the portable terminal 15 is put is a position of the terminal charging coil (denoted by symbol 15a in Fig. 16) incorporated in the portable terminal 15.

Then the controller 10 moves the charging coil 8 to the detected position of the terminal charging coil (denoted by symbol 15a in Fig. 16) of the portable terminal 15 by driving the motors 28 and 33 via the X-axis motor controller 36 and the Y-axis motor controller 37, respectively (S10 in Fig. 10), and starts charging via the charging coil controller 38 (S11 and S12 in Fig. 10).

During the charging, the controller 10 judges whether or not it is necessary to continue the charging (i.e., whether the charging has completed or not; S13 in Fig. 10) by performing the same operation as described in the above-mentioned Patent document 1 (JP-A-2009-247194). If judging that the charging has completed (i.e., full charging is reached), the controller 10 finishes the charging operation (S14 in Fig. 10).

Upon completion of the charging operation, the controller 10 checks whether or not the charging coil 8 is located at point A (S15 in Fig. 10) and then returns the charging coil 8 to point A (S6 in Fig. 10).

This check can be made on the basis of drive amounts of the motors 28 and 33 that are stored in the X-axis motor controller 36 and the Y-axis motor controller 37, respectively.

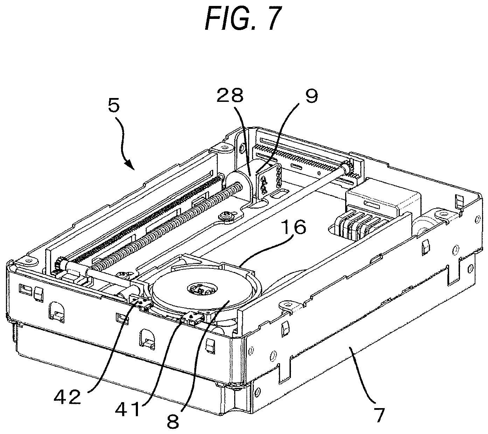

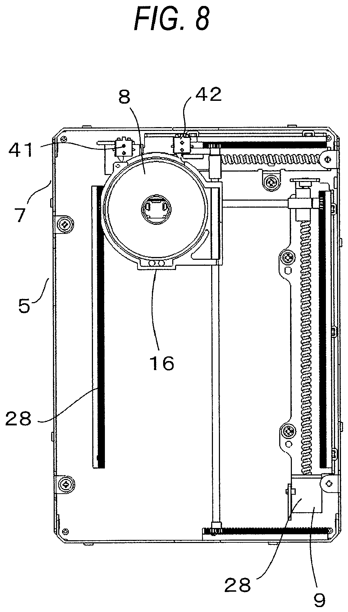

The controller 10 causes an operation illustrated by Figs. 7 and 8 if the controller 10 cannot return the charging coil 8 to point A, for example, if a deviation has occurred between a position calculated from drive amounts of the motors 28 and 33 that are stored in the X-axis motor controller 36 and the Y-axis motor controller 37 and an actual position that is measured by the position detection coils 14 due to certain impact that occurred during the operation.

That is, the controller 10 moves the charging coil 8 to a corner of the body case 7 by driving the motors 28 and 33 via the X-axis motor controller 36 and the Y-axis motor controller 37.

Switches 41 and 42 exist at the corner. When the charging coil 8 is moved to the corner of the body case 7, the switches 41 and 42 are operated and the controller 10 thereby judges that the charging coil 8 has been moved to an initial position.

In this state, the operation amounts of the motors 28 and 33 of driving by the X-axis motor controller 36 and the Y-axis motor controller 37 are also set to initial values. And a position control is started again from this position.

In the embodiment, as described above, the controller 10 returns the charging coil 8 to point A upon completion of a charging operation. This aspect will be described below in more detail.

As described above, point A is the center of the body case 7. Point A and the position detection coils 14 have the following relationships.

First, the position detection coils 14 will be described.

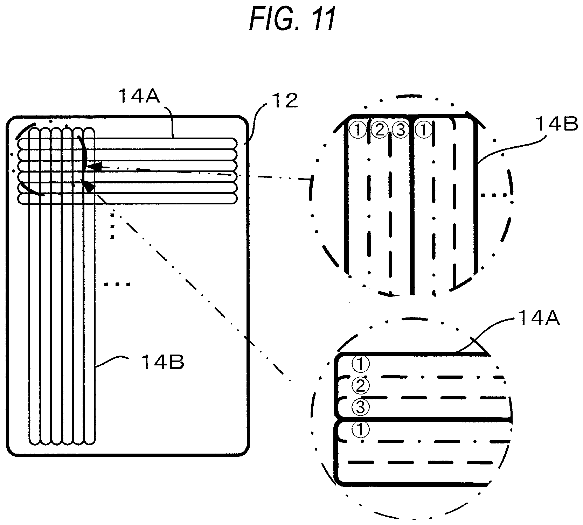

The position detection coils 14 are disposed on the ceramic intermediate plate 12 which is part of the placement plate 6. More specifically, as shown in Fig. 11, position detection coils 14A for detecting a position in the X-axis direction are disposed on the front surface of the intermediate plate 12 and position detection coils 14B for detecting a position in the Y-axis direction are disposed on the back surface of the intermediate plate 12.

The position detection coils 14A are perpendicular to the position detection coils 14B with the ceramic intermediate plate 12 (which is part of the placement plate 6) interposed in between.

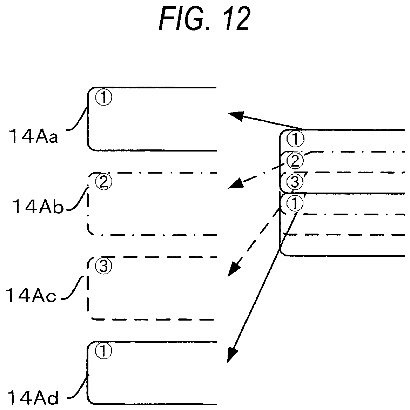

As seen from Figs. 11 and 12, the position detection coils 14A for detecting a position in the X-axis direction are plural position detection coils 14Aa, 14Ab, 14Ac, 14Ad which are arranged at prescribed intervals in the longitudinal direction of the ceramic intermediate plate 12 which is part of the placement plate 6.

As shown in Fig. 12, the position detection coils 14Aa, 14Ab, 14Ac, 14Ad, are shaped like a rectangular loop and are arranged so as to be shifted in order by 1/3 of their shorter-axis length in each shift.

Therefore, in Fig. 12, the bottom side of the position detection coil 14Aa is located at the same position as the top side of the position detection coil 14Ad.

In this manner, the plural position detection coils 14Aa, 14Ab, 14Ac, 14Ad are arranged regularly in the longitudinal direction of the ceramic intermediate plate 12 which is part of the placement plate 6.

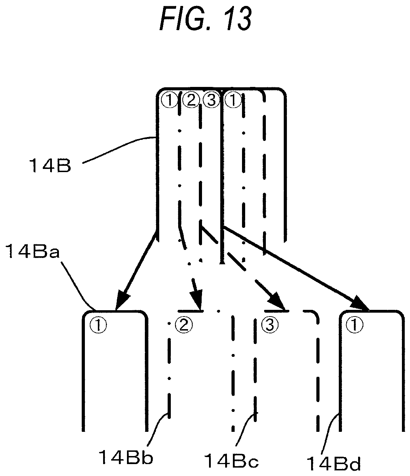

On the other hand, as seen from Figs. 11 and 13, the position detection coils 14B for detecting a position in the Y-axis direction are plural position detection coils 14Ba, 14Bb, 14Bc, 14Bd which are arranged at prescribed intervals in the shorter-axis direction of the ceramic intermediate plate 12 which is part of the placement plate 6.

As shown in Fig. 13, the position detection coils 14Ba, 14Bb, 14Bc, 14Bd are shaped like a rectangular loop and are arranged so as to be shifted in order by 1/3 of their shorter-axis length in each shift.

Therefore, in Fig. 13, the right-hand side of the position detection coil 14Ba is located at the same position as the left-hand side of the position detection coil 14Bd.

In this manner, the plural position detection coils 14Ba, 14Bb, 14Bc, 14Bd are arranged regularly in the shorter-axis direction of the ceramic intermediate plate 12 which is part of the placement plate 6.

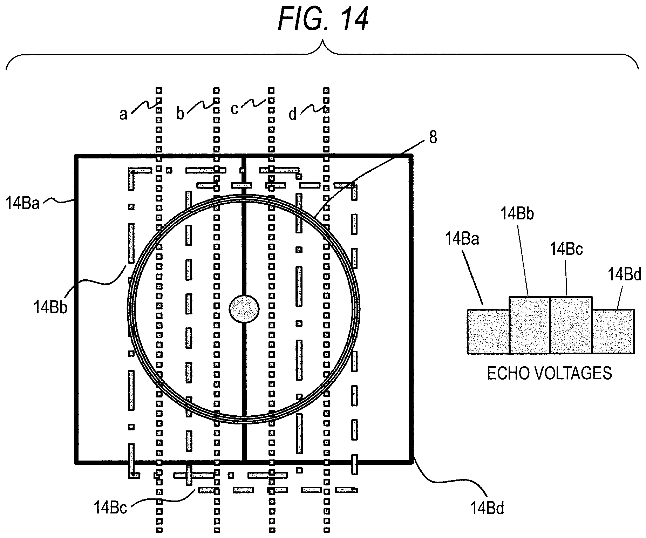

Next, relationships between the position detection coils 14Ba, 14Bb, 14Bc, 14Bd and point A which is the center of the body case 7 will be described with reference to Fig. 14.

Although Fig. 14 is drawn in such a manner that part of position detection coils 14Ba, 14Bb, 14Bc, and 14Bd are shifted also in the vertical direction so that they can be discriminated from each other easily, actually the position detection coils 14Ba, 14Bb, 14Bc, and 14Bd are arranged as shown in Fig. 13.

In Fig. 14, characters a, b, c, and d denote center lines that pass through the centers of the pairs of shorter-axis sides of the position detection coils 14Ba, 14Bb, 14Bc, and 14Bd, respectively.

It is important that as shown in Fig. 14 the center of the charging coil 8 that is standing by at point A not coincide with the position of any of the center lines a, b, c, and d of the position detection coils 14Ba, 14Bb, 14Bc, and 14Bd.

That is, after completion of charging, the charging coil 8 is moved to position A that does not coincide with the position of any of the center lines a, b, c, and d of the position detection coils 14Ba, 14Bb, 14Bc, and 14Bd (position A deviates from the positions of the center lines a, b, c, and d of the position detection coils 14Ba, 14Bb, 14Bc, and 14Bd) and stands by there (S2 or S7 in Fig. 10).

In the embodiment, since whether or not a portable terminal 15 has been put on the top surface of the placement plate 6 is detected (S8 in Fig. 10) using the 14Ba, 14Bb, 14Bc, and 14Bd, point A which is the standby position is set at a position that does not coincide with the position of any of the center lines a, b, c, and d of the position detection coils 14Ba, 14Bb, 14Bc, and 14Bd.

Naturally, whether or not a portable terminal 15 has been put on the top surface of the placement plate 6 may be detected (S8 in Fig. 10) using the 14Aa, 14Ab, 14Ac, 14Ad. In this case, a position that does not coincide with the position of any of the center lines a, b, c, d, ··· of the position detection coils 14Aa, 14Ab, 14Ac, 14Ad is set as point A which is the standby position of the charging coil 8.

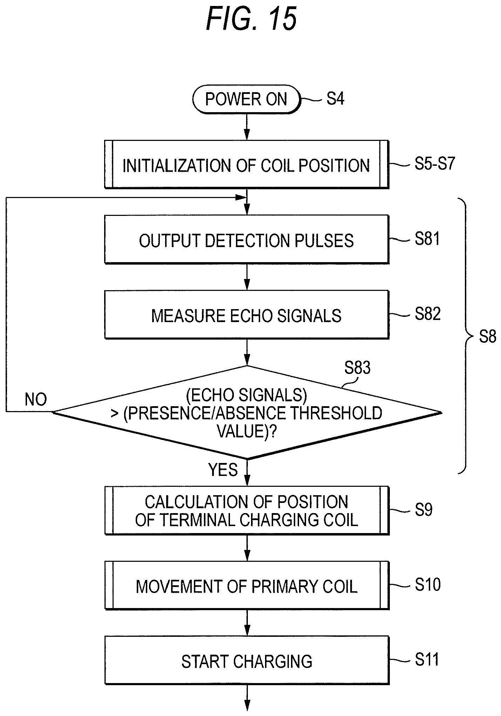

The operation will be described in more detail on the basis of the above-described configuration. When the power switch (not shown) is turned on (S4 in Fig. 10) to charge a portable terminal 15, as described above the controller 10 checks whether or not the charging coil 8 is located at point A (S5 in Figs. 10 and 15).

This check can be made on the basis of drive amounts of the motors 28 and 33 that are stored in the X-axis motor controller 36 and the Y-axis motor controller 37, respectively.

If judging that charging coil 8 is not located at point A, the controller 10 moves the charging coil 8 to point A (S6 in Figs. 10 and 15) and renders it in a charging standby state at point A (S7 in Figs. 10 and 15).

Then the controller 10 detects at what position on the top surface of the placement plate 6 a portable terminal 15 has been put in the manner shown in Fig. 3 using the position detection coils 14 (S8 and S9 in Figs. 10 and 15).

Actually, the position where a portable terminal 15 is put is a position of the terminal charging coil (denoted by symbol 15a in Fig. 16) incorporated in the portable terminal 15.

The above aspect will be described below in detail with reference to Figs. 14 and 15.

To detect, using the position detection coils 14, whether or not a portable terminal 15 has been put somewhere on the top surface of the placement plate 6 in the manner shown in Fig. 3, the detection coils controller 39 (see Fig. 9) supplies 1 MHz pulse signals to the position detection coils 14Ba, 14Bb, 14Bc, 14Bd, ··· sequentially (S81 in Fig. 15).

The controller 10 judges whether or not a portable terminal 15 has been put somewhere on the top surface of the placement plate 6 in the manner shown in Fig. 3 (S82 and S83 in Fig. 15) on the basis of whether echo signals are transmitted from the terminal charging coil (denoted by symbol 15a in Fig. 16) in response.

Echo signals detected by the position detection coils 14Ba, 14Bb, 14Bc, 14Bd, ··· at this time are stored temporarily in a memory 10a shown in Fig. 9.

As is well known, the terminal charging coil (denoted by symbol 15a in Fig. 16) is to resonate at 1 MHz before charging. Therefore, when the position detection coils 14Ba, 14Bb, 14Bc, 14Bd, ··· are supplied with 1 MHz pulse signals sequentially, the terminal charging coil 15a emits large echo signals. The position detection coils 14Ba, 14Bb, 14Bc, 14Bd, ··· detect the echo signals, whereby the fact that the portable terminal 15 has been put somewhere on the top surface of the placement plate 6 in the manner shown in Fig. 3 is detected.

Fig. 16 shows a state that the terminal charging coil 15a of a portable terminal 15 is located right over the center line b of a position detection coil 14Bb on the top surface of the placement plate 6. It is seen that among echo signals detected by position detection coils 14Ba, 14Bb, 14Bc, and 14Bd the one detected by the position detection coil is largest.

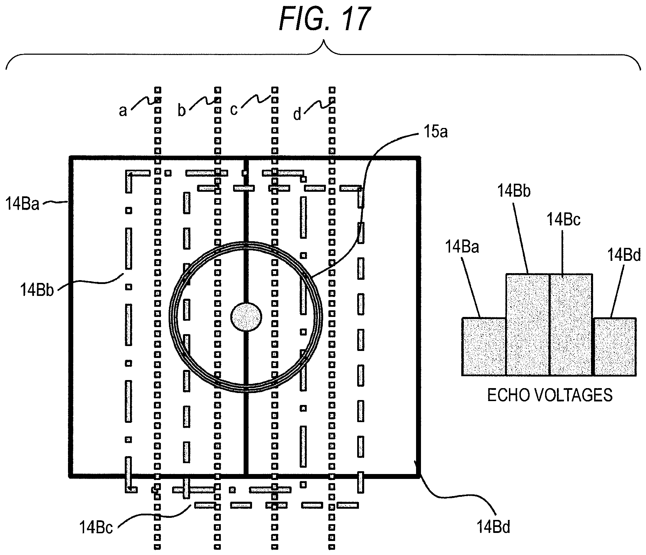

In contrast, Fig. 17 shows a state that the terminal charging coil 15a of a portable terminal 15 is located at a position between the center lines b and c of the position detection coils 14Bb and 14Bc on the top surface of the placement plate 6. Among echo signals detected by the position detection coils 14Ba, 14Bb, 14Bc, and 14Bd, the ones detected by the position detection coils 14Bb and 14Bc are larger than the ones detected by the position detection coils 14Ba and 14Bd but smaller than the echo signals shown in Fig. 16.

Depending on the type and the state (e.g., the back side is provided with a cover or a seal is stuck to the bask side) of a portable terminal 15, echo signals transmitted from the terminal charging coil 15a of the portable terminal 15 may be small as in the state shown in Fig. 17. An echo signal judgment level is lowered to enable proper detection of even such a portable terminal 15 when it is put somewhere on the top surface of the support plate 18 in the manner shown in Fig. 3.

However, where the echo signal judgment level is lowered as mentioned above, an erroneous operation may occur due to echo signals transmitted from the charging coil 8.

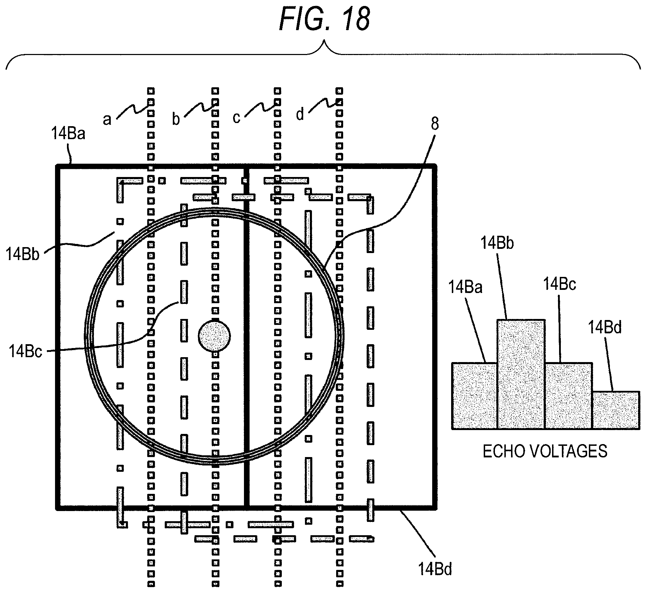

Fig. 18 shows a case that the standby position of the charging coil 8 (point A) is located right under the center line b of a position detection coil 14Bb, for example. In this case, it is seen that when echo signals transmitted from the charging coil 8 are detected by position detection coils 14Ba, 14Bb, 14Bc, and 14Bd, the level of the one detected by the position detection coil 14Bb is highest and has a large absolute value.

In this situation, it cannot be judged whether the echo signals detected by position detection coils 14Ba, 14Bb, 14Bc, and 14Bd are ones transmitted from the terminal charging coil 15a or ones transmitted from the charging coil 8. This may cause an erroneous operation to follow.

That is, as mentioned above, depending on the placement position on the top surface of the placement plate 6, the type, and the state (e.g., the back side is provided with a cover or a seal is stuck to the bask side) of a portable terminal 15, echo signals transmitted from the terminal charging coil 15a of the portable terminal 15 may be small as in the state shown in Fig. 17. The echo signal judgment level is lowered to enable proper detection of even such a portable terminal 15 when it is put somewhere on the top surface of the support plate 18 in the manner shown in Fig. 3.

However, where the echo signal judgment level is lowered as mentioned above, when the levels of echo signals transmitted from the charging coil 8 are high as shown in Fig. 18, the controller 10 may judge that a portable terminal 15 is put on the top surface of the placement plate 6 though no portable terminal 15 is put there actually and perform a following operation on that basis.

This is a cause of an erroneous operation. In the embodiment, to prevent such an event, point A where the charging coil 8 stands by after completion of charging is set at a position that does not coincide with the position any of the center lines a, b, c, and d of the position detection coils 14Ba, 14Bb, 14Bc, and 14Bd (the position deviates from the positions of the center lines a, b, c, and d of the position detection coils 14Ba, 14Bb, 14Bc, and 14Bd).

As a result, as show in Fig. 14, an echo signal transmitted from the charging coil 8 and detected by any of the position detection coils 14Ba, 14Bb, 14Bc, and 14Bd can be made small (smaller than the echo signals shown in Fig. 17).

Therefore, there does not occur an erroneous judgment as to whether or not a portable terminal 15 has been put on the top surface of the placement plate 6 and no erroneous operation will follow.

Once it is judged in the above-described manner that a portable terminal 15 has been put on the top surface of the placement plate 6, the controller 10 operates the detection coils controller 39 to supply pulse signals to the position detection coils 14Aa, 14Ab, 14Ac, 14Ad and the position detection coils 14Ba, 14Bb, 14Bc, 14Bd and thereby determines a position of the terminal charging coil 15a of the portable terminal 15 (S9 in Figs. 10 and 15).

As soon as a position of the terminal charging coil 15a of the portable terminal 15 is determined (S9 in Figs. 10 and 15), the controller 10 moves the charging coil 8 to the detected position of the terminal charging coil 15a of the portable terminal 15 by driving the motors 28 and 33 via the X-axis motor controller 36 and the Y-axis motor controller 37 (S10 in Figs. 10 and 15). Then, the controller 10 starts charging via the charging coil controller 38 (S11 and S12 in Fig. 10).

Next, a second embodiment of the invention will be described with reference to the drawings. In the second embodiment, part of the drawings that have been used above for the description of the first embodiment will be used again.

### (Embodiment 2)

As shown in Fig. 1, a steering wheel 3 is disposed at a front position in a vehicle compartment 2 of an automobile 1.

An electronic apparatus 4 for reproducing music and video and displaying a car navigation picture is disposed beside the steering wheel 3.

Furthermore, a wireless charging device 5 is disposed in the rear of the electronic apparatus 4 in the vehicle compartment 2.

As shown in Figs. 2-6, the wireless charging device 5 is equipped with a box-shaped body case 7 whose top surface is provided with a placement plate 6, a charging coil 8 which is disposed movably in the body case 7 so as to be opposed to the bottom surface of the placement plate 6, a driver 9 for moving the charging coil 8 in a horizontal direction in such a manner that it is kept opposed to the bottom surface of the placement plate 6, and a controller (denoted by numeral 10 in Fig. 9) which is connected to the driver 9 and the charging coil 8.

The individual members and units will be described below in detail.

First, the placement plate 6 will be described.

As shown in Fig. 6, the placement plate 6 is configured in such a manner that a back plate 13, an intermediate plate 12, and a surface plate 11 are laid one on another.

The surface plate 11 and the back plate 13 are made of a synthetic resin and the intermediate plate 12 is made of ceramic. That is, they are formed so as to allow a magnetic flux coming from the charging coil 8 to pass through themselves and go toward a portable terminal 15.

Position detection coils 14 (see Fig. 9) are disposed on the surfaces of the intermediate plate 12.

The position detection coils 14, which are the same as the ones used in the above-mentioned Patent document 1 (JP-A-2009-247194), serve to detect at what position on the top surface of the placement plate 6a portable terminal 15 has been put in a manner shown in Fig. 3.

In the embodiment, at what position on the top surface of the placement plate 6 a portable terminal 15 has been put in the manner shown in Fig. 3 is detected using the position detection coils 14 and then the charging coil 8 is moved to the position of a charging coil (not shown) of the portable terminal 15 by the driver 9.

Next, the charging coil 8 and its neighborhood will be described.

As seen from Figs. 4 and 5, the charging coil 8 is formed by winding a lead wire by plural turns into a circular ring shape and is held in a state that its outer circumferential surface and bottom surface are covered with a holding body 16 which is made of a synthetic resin.

As shown in Fig. 6, a support leg 17 which is made of a synthetic resin and integral with the holding body 16 extends downward (i.e., away from the charging coil 8) from the bottom surface of the holding body 16.

A gap of 0.3 mm is formed between the bottom surface of the support leg 17 and the top surface of a metal support plate 18 which is disposed under the support leg 17. Therefore, in an ordinary state, the bottom surface of the support leg 17 does not come into contact with the top surface of the support plate 18 while the charging coil 8 is being moved.

In the embodiment, in the above-described configuration, the support leg 17 is disposed under the charging coil 8.

A control board 19 and a bottom plate 20 of the body case 7 are disposed under the support plate 18, and a support body 21 which penetrates through the control board 19 is disposed between the bottom surface of the support plate 18 and the top surface of the bottom plate 20.

Next, the driver 9 will be described.

As shown in Figs. 4 and 5, the driver 9 is equipped with an X-axis drive shaft 22 and a Y-axis drive shaft 23. A middle portion of each of the X-axis drive shaft 22 and the Y-axis drive shaft 23 is engaged with a portion, outside its charging coil holding portion, of the holding body 16.

More specifically, a through-hole (not shown) through which the X-axis drive shaft 22 penetrates and a through-hole 24 through which the Y-axis drive shaft 23 penetrates are formed through the holding body 16 so as to be spaced from each other by a prescribed distance in the vertical direction and to cross each other. The X-axis drive shaft 22 and the Y-axis drive shaft 23 penetrate through those through-holes and are thereby engaged with the holding body 16.

The X-axis drive shaft 22 is provided with a worm wheel 25 at a position that is close to one end and gears 26 at the respective ends.

The worm wheel 25 is engaged with a worm 27 which is linked to a motor 28.

The gears 26 at the respective ends are engaged with respective gear plates 29.

Therefore, when the motor 28 is driven, the worm 27 is rotated, whereby the worm wheel 25 is moved in the X-axis direction together with the X-axis drive shaft 23. As a result, the charging coil 8 is moved in the X-axis direction.

The Y-axis drive shaft 23 is provided with a worm wheel 30 at a position that is close to one end and gears 31 at the respective ends.

The worm wheel 30 is engaged with a worm 32 which is linked to a motor 33.

The gears 31 at the respective ends are engaged with respective gear plates 34.

Therefore, when the motor 33 is driven, the worm 32 is rotated, whereby the worm wheel 30 is moved in the Y-axis direction together with the Y-axis drive shaft 23. As a result, the charging coil 8 is moved in the Y-axis direction.

In Fig. 4, numeral 35 denotes a flexible wiring board for energizing the charging coil 8. One end of the flexible wiring board 35 is fixed to a side surface of the above-mentioned support leg 17.

As shown in Fig. 9, the motors 28 and 33 are connected to the controller 10 via an X-axis motor controller 36 and a Y-axis motor controller 37, respectively.

The charging coil 8 is connected to the controller 10 via a charging coil controller 38, and the position detection coils 14 are connected to the controller 10 via a detection coils controller 39.

With the above-described configuration, in the embodiment, when a manipulation for turning off a power switch (not shown) is made (S1 in Fig. 10), the charging coil 8 is moved to the center (hereinafter referred to as point A) of the body case 7 (S2 in Fig. 10; see Figs. 4-6). Then the power is turned off (S3 in Fig. 10).

That is, in a state that no portable terminal 15 is put on the placement plate 6 of the body case 7 (see Fig. 2), as shown in Fig. 1 the placement plate 6 is exposed to the vehicle compartment 2.

Therefore, there may occur an event that a hand is put on the placement plate 6 inadvertently, in which case a load is imposed on the placement plate 6.

In view of the above, in the embodiment, since as shown in Figs. 4-6 the charging coil 8 is moved to the center of the body case 7, such a load is supported by the charging coil 8, the holding body 16, the support leg 17, and the support plate 18.

When such a load is imposed on the placement plate 6, the placement plate 6 is curved downward though slightly. In this state, the charging coil 8, the holding body 16, and the support leg 17 are moved downward, whereby the bottom surface of the support leg 17 comes into contact with the top surface of the support plate 18.

As a result, the load is supported by the support plate 18 via the placement plate 6, the charging coil 8, the holding body 16, and the support leg 17. Thus, damaging of the placement plate 6 or the charging coil 8 can be suppressed.

In the embodiment, to increase the strength against a load, the bottom surface of the support plate 18 is supported by the bottom plate 20 of the body case 7 via the support body 21.

Upon removal of such a load, the placement plate 6 returns upward elastically. And the charging coil 8 and the holding body 16 also return upward because of elastic recovery of the X-axis drive shaft 22 and the Y-axis drive shaft 23. Therefore, the bottom surface of the support leg 17 come to be located over the top surface of the support plate 18 with a gap formed between them.

Therefore, there is no obstruction to a later movement of the charging coil 8.

To charge a portable terminal 15, first, the power switch (not shown) is turned on (S4 in Fig. 10) and the portable terminal 15 is put on the top surface of the placement plate 6.

In the embodiment, even in this state, first, the controller 10 checks whether or not the charging coil 8 is located at point A (S5 in Fig. 10).

This check can be made on the basis of drive amounts of the motors 28 and 33 that are stored in the X-axis motor controller 36 and the Y-axis motor controller 37, respectively.

If judging that charging coil 8 is not located at point A, the controller 10 moves the charging coil 8 to point A (S6 in Fig. 10) and renders it in a charging standby state at point A (S7 in Fig. 10).

Then the controller 10 detects at what position on the top surface of the placement plate 6 the portable terminal 15 has been put in the manner shown in Fig. 3 using the position detection coils 14 (S8 and S9 in Fig. 10).

Actually, the position where the portable terminal 15 is put is a position of the terminal charging coil (denoted by symbol 15a in Fig. 16) incorporated in the portable terminal 15.

Then the controller 10 moves the charging coil 8 to the detected position of the terminal charging coil (denoted by symbol 15a in Fig. 16) of the portable terminal 15 by driving the motors 28 and 33 via the X-axis motor controller 36 and the Y-axis motor controller 37, respectively (S10 in Fig. 10), and starts charging via the charging coil controller 38 (S11 and S12 in Fig. 10).

During the charging, the controller 10 judges whether or not it is necessary to continue the charging (i.e., whether the charging has completed or not; S13 in Fig. 10) by performing the same operation as described in the above-mentioned Patent document 1 (JP-A-2009-247194). If judging that the charging has completed (i.e., full charging is reached), the controller 10 finishes the charging operation (S14 in Fig. 10).

Upon completion of the charging operation, the controller 10 checks whether or not the charging coil 8 is located at point A (S15 in Fig. 10) and then returns the charging coil 8 to point A (S6 in Fig. 10).

This check can be made on the basis of drive amounts of the motors 28 and 33 that are stored in the X-axis motor controller 36 and the Y-axis motor controller 37, respectively.

The controller 10 causes an operation illustrated by Figs. 7 and 8 if the controller 10 cannot return the charging coil 8 to point A, for example, if a deviation has occurred between a position calculated from drive amounts of the motors 28 and 33 that are stored in the X-axis motor controller 36 and the Y-axis motor controller 37 and an actual position that is measured by the position detection coils 14 due to certain impact that occurred during the operation.

That is, the controller 10 moves the charging coil 8 to a corner of the body case 7 by driving the motors 28 and 33 via the X-axis motor controller 36 and the Y-axis motor controller 37.

Switches 41 and 42 exist at the corner. When the charging coil 8 is moved to the corner of the body case 7, the switches 41 and 42 are operated and the controller 10 thereby judges that the charging coil 8 has been moved to an initial position.

In this state, the operation amounts of the motors 28 and 33 of driving by the X-axis motor controller 36 and the Y-axis motor controller 37 are also set to initial values. And a position control is started again from this position.

In the embodiment, as described above, the controller 10 returns the charging coil 8 to point A upon completion of a charging operation. This aspect will be described below in more detail.

As described above, point A is the center of the body case 7. Point A and the position detection coils 14 have the following relationships.

First, the position detection coils 14 will be described.

The position detection coils 14 are disposed on the ceramic intermediate plate 12 which is part of the placement plate 6. More specifically, as shown in Fig. 11, position detection coils 14A for detecting a position in the X-axis direction are disposed on the front surface of the intermediate plate 12 and position detection coils 14B for detecting a position in the Y-axis direction are disposed on the back surface of the intermediate plate 12.

The position detection coils 14A are perpendicular to the position detection coils 14B with the ceramic intermediate plate 12 (which is part of the placement plate 6) interposed in between.

As seen from Figs. 11 and 12, the position detection coils 14A for detecting a position in the X-axis direction are plural position detection coils 14Aa, 14Ab, 14Ac, 14Ad which are arranged at prescribed intervals in the longitudinal direction of the ceramic intermediate plate 12 which is part of the placement plate 6.

As shown in Fig. 12, the position detection coils 14Aa, 14Ab, 14Ac, 14Ad are shaped like a rectangular loop and are arranged so as to be shifted in order by 1/3 of their shorter-axis length in each shift.

Therefore, in Fig. 12, the bottom side of the position detection coil 14Aa is located at the same position as the top side of the position detection coil 14Ad.

In this manner, the plural position detection coils 14Aa, 14Ab, 14Ac, 14Ad are arranged regularly in the longitudinal direction of the ceramic intermediate plate 12 which is part of the placement plate 6.

On the other hand, as seen from Figs. 11 and 13, the position detection coils 14B for detecting a position in the Y-axis direction are plural position detection coils 14Ba, 14Bb, 14Bc, 14Bd which are arranged at prescribed intervals in the shorter-axis direction of the ceramic intermediate plate 12 which is part of the placement plate 6.

As shown in Fig. 13, the position detection coils 14Ba, 14Bb, 14Bc, 14Bd are shaped like a rectangular loop and are arranged so as to be shifted in order by 1/3 of their shorter-axis length in each shift.

Therefore, in Fig. 13, the right-hand side of the position detection coil 14Ba is located at the same position as the left-hand side of the position detection coil 14Bd.

In this manner, the plural position detection coils 14Ba, 14Bb, 14Bc, 14Bd are arranged regularly in the shorter-axis direction of the ceramic intermediate plate 12 which is part of the placement plate 6.

Next, relationships between the position detection coils 14Ba, 14Bb, 14Bc, 14Bd and point A which is the center of the body case 7 will be described with reference to Fig. 14.

Although Fig. 14 is drawn in such a manner that part of position detection coils 14Ba, 14Bb, 14Bc, and 14Bd are shifted also in the vertical direction so that they can be discriminated from each other easily, actually the position detection coils 14Ba, 14Bb, 14Bc, and 14Bd are arranged as shown in Fig. 13.

In Fig. 14, characters a, b, c, and d denote center lines that pass through the centers of the pairs of shorter-axis sides of the position detection coils 14Ba, 14Bb, 14Bc, and 14Bd, respectively.

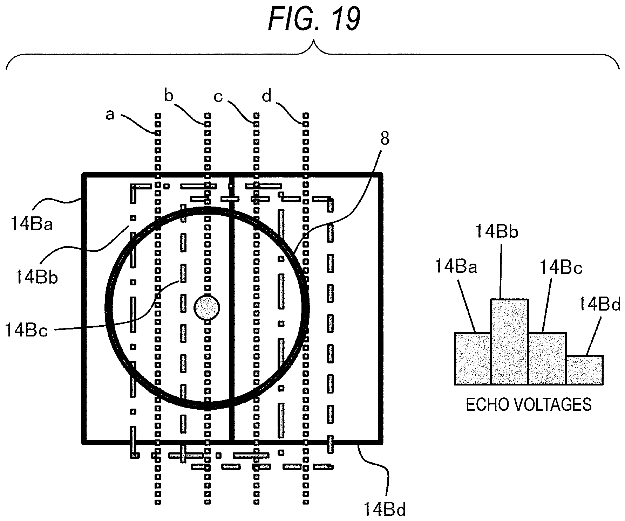

It is assumed that the charging coil 8 is standing by at the position that coincides with the center of the placement plate 6. With this setting, there are two cases, that is, a case shown in Fig. 14 in which the center of the charging coil 8 does not coincide with the position of any of the center lines a, b, c, and d of the position detection coils 14Ba, 14Bb, 14Bc, and 14Bd and a case shown in Fig. 19 in which the center of the charging coil 8 coincides with the position of one of the center lines a, b, c, and d of the position detection coils 14Ba, 14Bb, 14Bc, and 14Bd.

To detect whether or not a portable terminal 15 has been put on the placement plate 6 (S8 in Fig. 10), echo signals transmitted from the charging coil 8 are not necessary. However, if a judgment is made without taking echo signals transmitted from the charging coil 8 into consideration, whether or not a portable terminal 15 has been put on the placement plate 6 may be detected erroneously.

This will be explained below. Where the charging coil 8 is standing by in a state that its center does not coincide with the position of any of the center lines a, b, c, and d of the position detection coils 14Ba, 14Bb, 14Bc, and 14Bd (see Fig. 14), echo signals detected by the position detection coils 14Ba, 14Bb, 14Bc, and 14Bd are small.

However, in the state of Fig. 14, since the center of the charging coil 8 is close to the center lines b and c of the position detection coils 14Bb and 14Bc, the echo signals detected by the position detection coils 14Bb and 14Bc are larger than those detected by the position detection coils 14Ba and 14Bd.

In contrast, where the charging coil 8 is standing by in a state that its center coincides with the position of one of the center lines a, b, c, and d of the position detection coils 14Ba, 14Bb, 14Bc, and 14Bd (see Fig. 19), echo signals detected by the position detection coils 14Ba, 14Bb, 14Bc, and 14Bd are larger than in the case of Fig. 14.

In the case of Fig. 19, since the center of the charging coil 8 coincides with the position of the center line of the position detection coil 14Bb, an echo signal detected by the position detection coil 14Bb is larger than echo signals detected by the position detection coils 14Ba, 14Bc, and 14Bd.

That is, even where the charging coil 8 is standing by at point A which is the center of the placement plate 6, the magnitudes of echo signals transmitted from the charging coil 8 vary depending on the relationships between its position and the positions of the center lines a, b, c, and d of the position detection coils 14Ba, 14Bb, 14Bc, and 14Bd.

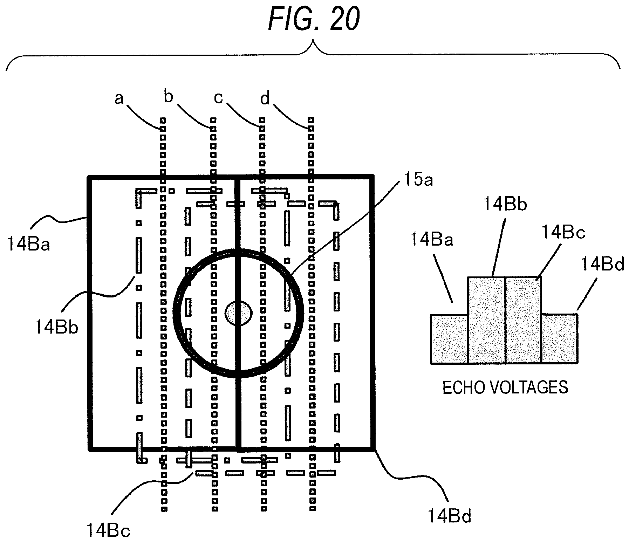

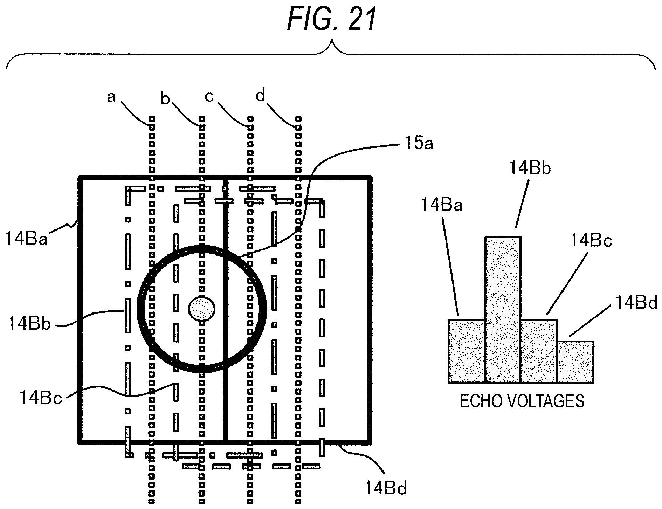

Figs. 20 and 21 show echo signals that are detected by position detection coils 14Ba, 14Bb, 14Bc, and 14Bd when a portable terminal 15 is put on the placement plate 6.

Fig. 20 shows a case that the terminal charging coil 15a is placed in such a manner that its center does not coincide with the position of any of the center lines a, b, c, and d of the position detection coils 14Ba, 14Bb, 14Bc, and 14Bd. In this case, echo signals detected by the position detection coils 14Ba, 14Bb, 14Bc, and 14Bd are small.

However, in the state of Fig. 20, since the center of the terminal charging coil 15a is close to the center lines b and c of the position detection coils 14Bb and 14Bc, the echo signals detected by the position detection coils 14Bb and 14Bc are larger than those detected by the position detection coils 14Ba and 14Bd.

Fig. 21 shows a case that the terminal charging coil 15a is placed in such a manner that its center coincides with the position of one of the center lines a, b, c, and d of the position detection coils 14Ba, 14Bb, 14Bc, and 14Bd. In this case, echo signals detected by the position detection coils 14Ba, 14Bb, 14Bc, and 14Bd are large.

However, in the state of Fig. 21, since the center of the terminal charging coil 15a coincides with the position of the center line b the position detection coils 14Bb, the echo signal detected by the position detection coils 14Bb is larger than those detected by the position detection coils 14Ba, 14Ba and 14Bd.

As described above, the position detection coils 14Ba, 14Bb, 14Bc, 14Bd which detect whether or not a portable terminal 15 has been put on the placement plate 6 detect echo signals that are transmitted from the charging coil 8 and the terminal charging coil 15a. And their detection levels depending on the positional relationships between the charging coil 8 or the terminal charging coil 15a and the position detection coils 14Ba, 14Bb, 14Bc, 14Bd.

Therefore, whether or not a portable terminal 15 has been put on the placement plate 6 may be detected erroneously if a judgment is made without taking echo signals transmitted from the charging coil 8 into consideration.

Naturally, whether or not a portable terminal 15 has been put on the top surface of the placement plate 6 may be detected (S8 in Fig. 10) using the 14Aa, 14Ab, 14Ac, 14Ad. In this case, relationships between point A which is the standby position of the charging coil 8 and the positions of the center lines a, b, c, d, ··· of the position detection coils 14Aa, 14Ab, 14Ac, 14Ad are taken into consideration.

The operation will be described in more detail on the basis of the above-described configuration. When the power switch (not shown) is turned on (S4 in Fig. 10) to charge a portable terminal 15, as described above the controller 10 checks whether or not the charging coil 8 is located at point A (S5 in Fig. 10).

This check can be made on the basis of drive amounts of the motors 28 and 33 that are stored in the X-axis motor controller 36 and the Y-axis motor controller 37, respectively.

If judging that charging coil 8 is not located at point A, the controller 10 moves the charging coil 8 to point A (S6 in Fig. 10) and renders it in a charging standby state at point A (S7 in Fig. 10).

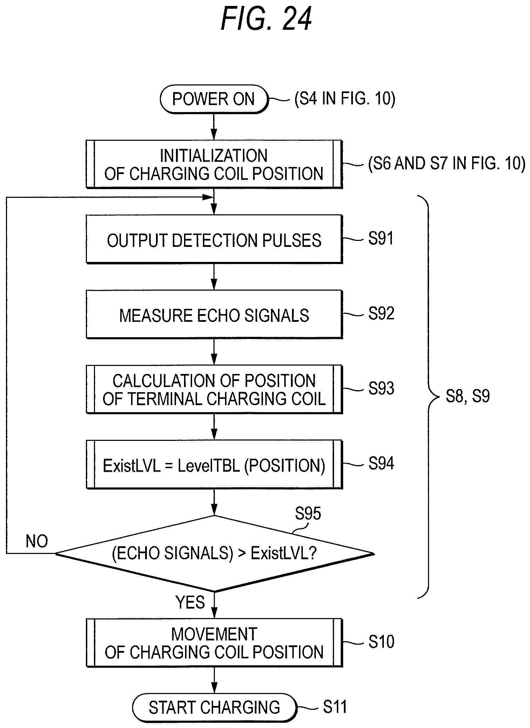

Then the controller 10 detects at what position on the top surface of the placement plate 6 a portable terminal 15 has been put in the manner shown in Fig. 3 using the position detection coils 14 (S8 and S9 in Figs. 10 and 24).

Actually, the position where a portable terminal 15 is put is a position of the terminal charging coil (denoted by symbol 15a in Fig. 16) incorporated in the portable terminal 15.

The above aspect will be described below in detail with reference to Figs. 14 and 24. To detect, using the position detection coils 14, whether or not has been put somewhere on the top surface of the placement plate 6 a portable terminal 15 in the manner shown in Fig. 3, the detection coils controller 39 (see Fig. 9) supplies 1 MHz pulse signals to the position detection coils 14Ba, 14Bb, 14Bc, 14Bd sequentially (S8 in Fig. 15).

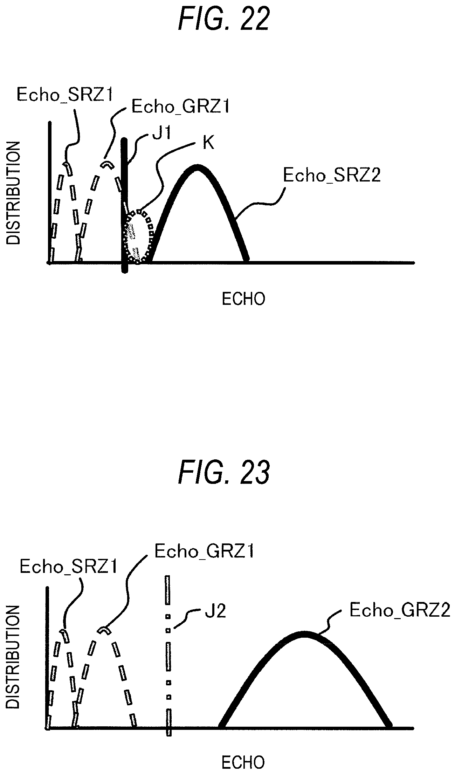

At this time, an echo signal detected by the position detection coils 14Ba, 14Bb, 14Bc, 14Bd are, for example, as shown in Fig. 22 or 23.

In Figs. 22 and 23, the X axis represents the echo signal level and Y axis represents the frequency of echo signals.

More specifically, in Fig. 22, Echo_SRZ1 denotes a distribution of echo signals transmitted from the charging coil 8 in the case where the charging coil 8 is in the case where the charging coil 8 is in the state of Fig. 14 and Echo_GRZ1 denotes a distribution of echo signals transmitted from the charging coil 8 in the case where the charging coil 8 is in the state of Fig. 19.

That is, from Fig. 22, it is understood that, as described above, echo signals detected by the position detection coils 14Ba, 14Bb, 14Bc, 14Bd are larger when the center of the charging coil 8 coincides with the position of one of the center lines of position detection coils 14Ba, 14Bb, 14Bc, and 14Bd (see Fig. 19) than when the center of the charging coil 8 deviates from the position of any of the center lines of position detection coils 14Ba, 14Bb, 14Bc, and 14Bd (see Fig. 14).

In Fig. 22, Echo_SRZ2 denotes a distribution of echo signals transmitted from the terminal charging coil 15a in the case where the terminal charging coil 15a is in the state of Fig. 20.

In Fig. 23, Echo_SRZ1 denotes the distribution of echo signals transmitted from the charging coil 8 in the case where the charging coil 8 is in the state of Fig. 14 and Echo_GRZ1 denotes the distribution of echo signals transmitted from the charging coil 8 in the case where the charging coil 8 is in the state of Fig. 19.

That is, from Fig. 22, it is understood that, as described above, echo signals detected by the position detection coils 14Ba, 14Bb, 14Bc, 14Bd are larger when the center of the charging coil 8 coincides with the position of one of the center lines of position detection coils 14Ba, 14Bb, 14Bc, and 14Bd (see Fig. 19) than when the center of the charging coil 8 deviates from the position of any of the center lines of position detection coils 14Ba, 14Bb, 14Bc, and 14Bd (see Fig. 14).

In Fig. 23, Echo_GRZ2 denotes a distribution of echo signals transmitted from the terminal charging coil 15a in the case where the terminal charging coil 15a is in the state of Fig. 21.

By comparing Figs. 22 and 23, it is understood that echo signals detected by the position detection coils 14Ba, 14Bb, 14Bc, 14Bd are larger when the center of the terminal charging coil 15a coincides with the position of one of the center lines of position detection coils 14Ba, 14Bb, 14Bc, and 14Bd (see Fig. 21) than when the center of the terminal charging coil 15a deviates from the position of any of the center lines of position detection coils 14Ba, 14Bb, 14Bc, and 14Bd (see Fig. 20).

The following description will be made on the basis of the above explanation. In the embodiment, when the power switch (not shown) is turned on, the controller 10 controls the motors 28 and 29 to move the charging coil 8 to point A which coincides with the center of the placement plate 6 (S4-S7 in Fig. 10; see Fig. 24).

In this state, the position detection coils 14Ba, 14Bb, 14Bc, 14Bd send 1 MHz pulse signals sequentially (S91 in Fig. 24).

Then Echo signals that are detected by the position detection coils 14Ba, 14Bb, 14Bc, 14Bd sequentially are then stored in a memory 10a shown in Fig. 9.

Symbol J1 shown in Fig. 22 denotes a judgment level that is set in the controller 10. First, the controller 10 judges whether or not there exists an echo signal whose level is higher than the judgment level J1.

In the case of Fig. 22, part (high-level side) of the echo signals Echo_GRZ1 that are produced when the center of the charging coil 8 coincides with the position of one of the center lines of position detection coils 14Ba, 14Bb, 14Bc, and 14Bd (see Fig. 19) and the echo signals Echo_SRZ2 transmitted from the terminal charging coil 15a are larger than the judgment level J1.

Therefore, in the embodiment, to determine, through calculation, from which portion echo signals that are larger than the judgment level J1 can be detected, the controller 10 again causes the position detection coils 14Ba, 14Bb, 14Bc, 14Bd to send 1 MHz pulse signals sequentially (S91 in Fig. 24).

However, since the controller 10 knows the position of the charging coil 8, actually it is detected whether the terminal charging coil 15a is in the state of Fig. 20 or Fig. 21.

If, as a result, it is judged that the terminal charging coil 15a is in the state of Fig. 20, the controller 10 maintains the judgment level J1 and judges, using the judgment level J1, at what position on the top surface of the placement plate 6 a portable terminal 15 has been put in the manner shown in Fig. 3 (S92 and S93 in Fig. 24).

In the case of Fig. 22, part (high-level side) of the echo signals Echo_GRZ1 that are produced when the center of the charging coil 8 coincides with the position of one of the center lines of position detection coils 14Ba, 14Bb, 14Bc, and 14Bd (see Fig. 19) and the echo signals Echo_SRZ2 transmitted from the terminal charging coil 15a are larger than the above judgment level J1. Therefore, the controller 10 judges that a portable terminal 15 has been put on somewhere on the top surface of the placement plate 6 in the manner shown in Fig. 3 (S94 and S95 in Fig. 24).

Subsequently, the controller 10 operates the detection coils controller 39 to supply pulse signals to the position detection coils 14Aa, 14Ab, 14Ac, 14Ad and position detection coils 14Ba, 14Bb, 14Bc, 14Bd and thereby determines a position of the terminal charging coil 15a of the portable terminal 15 (S9 in Figs. 10 and 24).

As soon as a position of the terminal charging coil 15a of the portable terminal 15 is determined, the controller 10 moves the charging coil 8 to the detected position of the terminal charging coil 15a of the portable terminal 15 by driving the motors 28 and 33 via the X-axis motor controller 36 and the Y-axis motor controller 37 (S10 in Figs. 10 and 24). Then, the controller 10 starts charging via the charging coil controller 38 (S11 and S12 in Fig. 10).

In the case of Fig. 22, part K (high-level side) of the echo signals Echo_GRZ1 that are produced when the center of the charging coil 8 coincides with the position of one of the center lines of position detection coils 14Ba, 14Bb, 14Bc, and 14Bd (see Fig. 19) are larger than the above judgment level J1. However, if judging on the basis of ensuing detection results that no portable terminal 15 is put on the top surface of the placement plate 6 in the manner shown in Fig. 3, then the controller 10 judges that the echo signals that are larger than the judgment level J1 are ones transmitted from the charging coil 8 being in the state of Fig. 19 and switches the judgment level J1 to a higher judgment level J2 (see Fig. 23).

As a result, it is judged that no portable terminal 15 is put on the top surface of the placement plate 6 in the manner shown in Fig. 3 and a charging operation is not started.

If detecting at the above-described step S91 shown in Fig. 24 that the portable terminal 15 is in the state of Fig. 21, the controller 10 switches from the judgment level J1 to a higher judgment level J2 (see Fig. 23).

Subsequently, the controller 10 judges at what position on the top surface of the placement plate 6 the portable terminal 15 is put in the manner shown in Fig. 3 (S92 and S93 in Fig. 24).

In the case of Fig. 23, since the echo signals Echo_GRZ2 transmitted from the terminal charging coil 15a are higher than the above judgment level J2, the controller 10 judges that a portable terminal 15 has been put on somewhere on the top surface of the placement plate 6 in the manner shown in Fig. 3 (S94 and S95 in Fig. 24).

Subsequently, the controller 10 operates the detection coils controller 39 to supply pulse signals to the position detection coils 14Aa, 14Ab, 14Ac, 14Ad and position detection coils 14Ba, 14Bb, 14Bc, 14Bd and thereby determines a position of the terminal charging coil 15a of the portable terminal 15 (S9 in Figs. 10 and 24).

As soon as a position of the terminal charging coil 15a of the portable terminal 15 is determined, the controller 10 moves the charging coil 8 to the detected position of the terminal charging coil 15a of the portable terminal 15 by driving the motors 28 and 33 via the X-axis motor controller 36 and the Y-axis motor controller 37 (S10 in Figs. 10 and 24). Then, the controller 10 starts charging via the charging coil controller 38 (S11 and S12 in Fig. 10).

As described above, in the embodiment, the controller 10 supplies detection pulses to the plural position detection coils 14Ba, 14Bb, 14Bc, 14Bd and varies, between J1 and J2, the judgment level for judgment as to whether or not a portable terminal 15 has been put on the top surface of the placement plate 6 on the basis of echo signals detected by the position detection coils 14Ba, 14Bb, 14Bc, 14Bd.

Then the controller 10 judges whether or not a portable terminal 15 has been put on the top surface of the placement plate 6 using the judgment level J1 or J2. Therefore, the controller 10 can judge whether or not a portable terminal 15 has been put on the top surface of the placement plate 6 without being disturbed by echo signals transmitted from the charging coil 8, as a result of which an erroneous operation can be prevented.

Although the invention has been described in detail by referring to the particular embodiments, it is apparent to those skilled in the art that various changes and modifications are possible without departing from the spirit and scope of the invention.

The present application is based on Japanese Patent Application Nos. 2012-175717 and 2012-175718 both filed on August 8, 2012, the disclosures of which are incorporated herein by reference.

### Industrial Applicability

As described above, in the invention, since after completion of charging of a portable terminal by the charging coil, the controller moves, using the driver, the charging coil to a position where its center deviates from the center of any of the plural position detection coils, echo signals transmitted from the charging coil in response to pulse signals transmitted from the position detection coils become sufficiently smaller than the judgment level.

This prevents an event that whether or not a portable terminal has been put on the top surface of the placement plate or whether or not a portable terminal has been put on somewhere on the top surface of the placement plate is detected erroneously on the basis of echo signals transmitted from the charging coil, causing an erroneous operation to follow.

It is therefore expected that the invention can be utilized for vehicular and home wireless charging devices.

Furthermore, providing the comprising a body case whose top surface is provided with a placement plate; plural position detection coils which detect a position of a portable terminal that is put on a top surface of the placement plate; a charging coil which is disposed movably in the body case so as to be opposed to a bottom surface of the placement plate; a driver which moves the charging coil in such a manner that it is kept opposed to the bottom surface of the placement plate; and a controller which is connected to the driver and the charging coil, wherein the controller causes the plural position detection coils to send detection pulses, then varies a judgment level for judgment as to whether a portable terminal has been put on the top surface of the placement plate on the basis of echo signals detected by the position detection coils, and thereafter judges whether a portable terminal has been put on the top surface of the placement plate using the judgment level, the invention makes it possible to prevent an erroneous operation.

That is, in the invention, the controller causes the plural position detection coils to send detection pulses and then varies a judgment level for judgment as to whether a portable terminal has been put on the top surface of the placement plate on the basis of echo signals detected by the position detection coils.

Subsequently, the controller judges whether a portable terminal has been put on the top surface of the placement plate using the judgment level. Therefore, whether or not a portable terminal has been put on the top surface of the placement plate can be judged without being disturbed by echo signals transmitted from the charging coil, as a result of which an erroneous operation can be prevented.

It is therefore expected that the invention can be utilized for vehicular and home wireless charging devices.

### Description of Symbols

1: Automobile
2: Vehicle compartment
3: Steering wheel
4: Electronic apparatus
5: Wireless charging device
6: Placement plate
7: Body case
8: Charging coil
9: Driver
10: Controller
10a: Memory
11: Surface plate
12: Intermediate plate
13: Back plate
14: Position detection coil
14Aa, 14Ab, 14Ac, 14Ad, 14Ba, 14Bb, 14Bc, 14Bd: Position detection coil
15: Portable terminal
15a: Terminal charging coil
16: Holding body
17: Support leg
18: Support plate
19: Control board
20: Bottom plate
21: Support body
22: X-axis drive shaft
23: Y-axis drive shaft
24: Through-hole
25: Worm wheel
26: Gear
27: Worm
28: Motor
29: Gear plate
30: Worm wheel
31: Gear
32: Worm
33: Motor
34: Gear plate
35: Flexible wiring board
36: X-axis motor controller
37: Y-axis motor controller
38: Charging coil controller
39: Detection coils controller
41: Switch
42: Switch

## Claims

1. A wireless charging device (5), comprising:
a body case (7) whose top surface is provided with a placement plate (6);
plural position detection coils (14) that are provided in the placement plate (6) and detect a position of a portable terminal (15) which is put on a top surface of the placement plate (6);
a charging coil (8) which is disposed movably in the body case (7) so as to be opposed to a bottom surface of the placement plate (6);
a driver (9) adapted to move the charging coil (8) in a state that the charging coil (8) is kept opposed to the bottom surface of the placement plate (6); and
a controller (10) that is connected to the driver (9) and the charging coil (8), **characterized in that** in response to the completion of charging of the portable terminal (15) by the charging coil (8), the controller (10) provides means to move by using the driver (9), the charging coil (8) to a position where a center of the charging coil (8) deviates from respective centers of the plural position detection coils (14) and the center of the charging coil (8) is located inside plural position detection coils (14).

2. The wireless charging device (5) according to claim 1, further comprising:
a support leg (17) that is disposed under the charging coil (8),
wherein a gap is formed between a bottom surface of the support leg (17) and a top surface of a support plate (18) which is disposed under the support leg (17).

3. The wireless charging device (5) according to claim 2, further comprising:
a holding body (16) that is made of a synthetic resin and covers an outer circumference and a bottom surface of the charging coil (8),
wherein a bottom surface of the holding body (16) is integral with the support leg (17).

4. The wireless charging device (5) according to claim 3, wherein the driver (9) is linked to a portion, adjacent to the outer circumference of the charging coil (8), of the holding body (16).

5. The wireless charging device (5) according to claim 4, wherein the driver (9) comprises an X-axis drive shaft and a Y-axis drive shaft each of which is engaged with the holding body (16) outside a charging coil (8) holding portion of the holding body (16).

6. The wireless charging device (5) according to any one of claims 3 to 5, wherein the support plate (18) which is disposed under the support leg (17) is made of a metal.

7. The wireless charging device (5) according to claim 6, wherein a bottom plate (20) of the body case (7) is disposed under the support leg (17); and
wherein the wireless charging device (5) further comprises a support body (21) which is disposed between a bottom surface of the support plate (18) and a top surface of the bottom plate (20).

8. An automobile comprising the wireless charging device (5) according to any one of claims 1 to 7 which is disposed in a vehicle compartment (2).

9. A method for driving a wireless charging device (5) for charging a portable terminal (15), the wireless charging device (5) including:
a placement plate (6) provided on a top surface of a body case (7);
plural position detection coils (14) that detect a position of a portable terminal (15) which exists on the placement plate (6);
a charging coil (8) which is disposed in the body case (7) so as to be movable being opposed to a bottom surface of the placement plate (6);
a driver (9) adapted to move the charging coil (8); and
a controller (10) that is connected to the driver (9) and the charging coil (8);
the method comprising:
a step of moving, by using the driver (9), the charging coil (8) to a position where a center of the charging coil (8) deviates from respective centers of the plural position detection coils (14), after completion of charging of the portable terminal (15) by the charging coil (8) and the center of the charging coil (8) is located inside plural position detection coils (14).

## Patentansprüche

1. Drahtlose Ladevorrichtung (5), aufweisend:
ein Körpergehäuse (7), dessen obere Fläche mit einer Auflageplatte (6) versehen ist;
mehrere Positionserfassungsspulen (14), die in der Auflageplatte (6) vorgesehen sind und eine Position eines auf einer oberen Fläche der Auflageplatte (6) angeordneten tragbaren Endgeräts (15) erfassen;
eine Ladespule (8), die beweglich so im Körpergehäuse (7) angeordnet ist, dass sie einer Bodenfläche der Auflageplatte (6) gegenüberliegt;
einen Treiber (9), der angepasst ist, um die Ladespule (8) in eine Stellung zu bewegen, in der die Ladespule (8) gegenüberliegend zur Bodenfläche der Auflageplatte (6) gehalten wird; und
eine Steuerung (10), die mit dem Treiber (9) und der Ladespule (8) verbunden ist,
**dadurch gekennzeichnet, dass**
die Steuerung (10), als Reaktion auf den Abschluss des Ladens des tragbaren Endgeräts (15) durch die Ladespule (8), Mittel bereitstellt, um, unter Anwenden des Treibers (9), die Ladespule (8) in eine Position zu bewegen, in der eine Mitte der Ladespule (8) von den jeweiligen Mitten der mehreren Positionserfassungsspulen (14) abweicht und die Mitte der Ladespule (8) innerhalb der mehreren Positionserfassungsspulen (14) angeordnet ist.

2. Drahtlose Ladevorrichtung (5) nach Anspruch 1, ferner aufweisend:
ein Stützbein (17), das unter der Ladespule (8) angeordnet ist,
wobei zwischen einer Bodenfläche des Stützbeins (17) und einer oberen Fläche einer Trägerplatte (18), die unter dem Stützbein (17) angeordnet ist, ein Spalt ausgebildet ist.

3. Drahtlose Ladevorrichtung (5) nach Anspruch 2, ferner aufweisend:
einen Haltekörper (16), der aus einem Kunstharz hergestellt ist und einen Außenumfang und eine Bodenfläche der Ladespule (8) abdeckt,
wobei eine Bodenfläche des Haltekörpers (16) integral mit dem Stützbein (17) ausgebildet ist.

4. Drahtlose Ladevorrichtung (5) nach Anspruch 3, wobei der Treiber (9) mit einem an den äußeren Umfang der Ladespule (8) angrenzenden Abschnitt des Haltekörpers (16) verbunden ist.

5. Drahtlose Ladevorrichtung (5) nach Anspruch 4, wobei der Treiber (9) eine X-Achsen-Antriebswelle und eine Y-Achsen-Antriebswelle aufweist, von denen jede mit dem Haltekörper (16) außerhalb eines Halteabschnitts des Haltekörpers (16) für die Ladespule (8) in Eingriff steht.

6. Drahtlose Ladevorrichtung (5) nach einem der Ansprüche 3 bis 5, wobei die unter dem Stützbein (17) angeordnete Trägerplatte (18) aus einem Metall hergestellt ist.

7. Drahtlose Ladevorrichtung (5) nach Anspruch 6, wobei eine Bodenplatte (20) des Körpergehäuses (7) unter dem Stützbein (17) angeordnet ist; und
wobei die drahtlose Ladevorrichtung (5) ferner einen zwischen einer unteren Fläche der Trägerplatte (18) und einer oberen Fläche der Bodenplatte (20) angeordneten Trägerkörper (21) umfasst.

8. Kraftfahrzeug, aufweisend die in einem Fahrzeugraum (2) angeordnete drahtlose Ladevorrichtung (5) nach einem der Ansprüche 1 bis 7.

9. Verfahren zum Betreiben einer drahtlosen Ladevorrichtung (5) zum Laden eines tragbaren Endgeräts (15), wobei die drahtlose Ladevorrichtung (5) Folgendes aufweist:
eine Auflageplatte (6), die auf einer oberen Fläche eines Körpergehäuses (7) bereitgestellt ist;
mehrere Positionserfassungsspulen (14), die eine Position eines tragbaren Endgeräts (15) erfassen, das auf der Auflageplatte (6) vorhanden ist;
eine Ladespule (8), die so im Körpergehäuse (7) angeordnet ist, dass sie beweglich einer Bodenfläche der Auflageplatte (6) gegenüberliegt;
einen Treiber (9), der angepasst ist, um die Ladespule (8) zu bewegen; und
eine Steuerung (10), die mit dem Treiber (9) und der Ladespule (8) verbunden ist,
wobei das Verfahren Folgendes umfasst:
einen Schritt des Bewegens der Ladespule (8), nach Abschluss des Ladens des tragbaren Endgeräts (15) durch die Ladespule (8), unter Anwenden des Treibers (9), in eine Position, in der eine Mitte der Ladespule (8) von den jeweiligen Mitten der mehreren Positionserfassungsspulen (14) abweicht und die Mitte der Ladespule (8) innerhalb der mehreren Positionserfassungsspulen (14) angeordnet ist.

## Revendications

1. Dispositif de charge sans fil (5) comprenant :
un boîtier de corps (7) dont la surface supérieure est prévue avec une plaque de mise en place (6) ;
une pluralité de bobines de détection de position (14) qui sont prévues dans la plaque de mise en place (6) et détectent une position d'un terminal portable (15) qui est placé sur une surface supérieure de la plaque de mise en place (6) ;
une bobine de charge (8) qui est disposée, de manière mobile, dans le boîtier de corps (7) afin d'être opposée à une surface inférieure de la plaque de mise en place (6) ;
un dispositif d'entraînement (9) adapté pour déplacer la bobine de charge (8) dans un état dans lequel la bobine de charge (8) est maintenue à l'opposé de la surface inférieure de la plaque de mise en place (6) ; et
un organe de commande (10) qui est raccordé au dispositif d'entraînement (9) et à la bobine de charge (8),
**caractérisé en ce que** :
en réponse à l'achèvement de la charge du terminal portable (15) par la bobine de charge (8), l'organe de commande (10) fournit des moyens pour déplacer, à l'aide du dispositif d'entraînement (9), la bobine de charge (8) dans une position où un centre de la bobine de charge (8) dévie des centres respectifs de la pluralité de bobines de détection de position (14) et le centre de la bobine de charge (8) est positionné à l'intérieur de la pluralité de bobines de détection de position (14).

2. Dispositif de charge sans fil (5) selon la revendication 1, comprenant en outre :
une patte de support (17) qui est disposée sous la bobine de charge (8),
dans lequel un espace est formé entre une surface inférieure de la patte de support (17) et une surface supérieure d'une plaque de support (18) qui est disposée sous la patte de support (17).

3. Dispositif de charge sans fil (5) selon la revendication 2, comprenant en outre :
un corps de maintien (16) qui est réalisé à partir d'une résine synthétique et recouvre une circonférence externe et une surface inférieure de la bobine de charge (8),
dans lequel une surface inférieure du corps de maintien (16) est solidaire avec la patte de support (17).

4. Dispositif de charge sans fil (5) selon la revendication 3, dans lequel le dispositif d'entraînement (9) est relié à une partie, adjacente à la circonférence externe de la bobine de charge (8), du corps de maintien (16).

5. Dispositif de charge sans fil (5) selon la revendication 4, dans lequel le dispositif d'entraînement (9) comprend un arbre d'entraînement d'axe X et un arbre d'entraînement d'axe Y dont chacun est mis en prise avec le corps de maintien (16) à l'extérieur d'une partie de maintien de bobine de charge (8) du corps de maintien (16).

6. Dispositif de charge sans fil (5) selon l'une quelconque des revendications 3 à 5, dans lequel la plaque de support (18) qui est disposée sous la patte de support (17) est réalisée à partir d'un métal.

7. Dispositif de charge sans fil (5) selon la revendication 6, dans lequel une plaque inférieure (20) du boîtier de corps (7) est disposée sous la patte de support (17) ; et
dans lequel le dispositif de charge sans fil (5) comprend en outre un corps de support (21) qui est disposé entre une surface inférieure de la plaque de support (18) et une surface supérieure de la plaque inférieure (20).

8. Automobile comprenant le dispositif de charge sans fil (5) selon l'une quelconque des revendications 1 à 7, qui est disposé dans un compartiment de véhicule (2).

9. Procédé pour entraîner un dispositif de charge sans fil (5) pour charger un terminal portable (15), le dispositif de charge sans fil (5) comprenant :
une plaque de mise en place (6) prévue sur une surface supérieure d'un boîtier de corps (7) ;
une pluralité de bobines de détection de position (14) qui détectent une position d'un terminal portable (15) qui existe sur la plaque de mise en place (6) ;
une bobine de charge (8) qui est disposée dans le boîtier de corps (7) afin de pouvoir être mobile en étant opposée à une surface inférieure de la plaque de mise en place (6) ;
un dispositif d'entraînement (9) adapté pour déplacer la bobine de charge (8) ; et
un organe de commande (10) qui est raccordé au dispositif d'entraînement (9) et à la bobine de charge (8) ;
le procédé comprenant :
une étape pour déplacer, à l'aide du dispositif d'entraînement (9), la bobine de charge (8) dans une position où un centre de la bobine de charge (8) dévie des centres respectifs de la pluralité de bobines de détection de position (14), après l'achèvement de la charge du terminal portable (15) par la bobine de charge (8) et le centre de la bobine de charge (8) est positionné à l'intérieur de la pluralité de bobines de détection de position (14).
